# EUROPÄISCHE PATENTSCHRIFT

(11) **EP 0 365 515 B1**
(45) Veröffentlichungstag und Bekanntmachung des Hinweises auf die Patenterteilung: **13.01.1993**
(21) Anmeldenummer: 89890268.9
(22) Anmeldetag: 11.10.1989
(51) Int. Cl.: B28B 1/54, C21B 3/08, C04B 5/00

(54) **Vorrichtung zum Herstellen von Hüttenbims**
Device for making foundry pumice
Dispositif pour la fabrication de laitier ponce

(30) Priorität: 20.10.1988 AT 2588/88
(43) Veröffentlichungstag der Anmeldung: 25.04.1990
(73) Patentinhaber: VOEST-ALPINE INDUSTRIEANLAGENBAU GESELLSCHAFT m.b.H., A-4020 Linz (AT); Hulek, Anton, Dipl.-Ing., A-4040 Linz (AT)
(72) Erfinder: Hulek, Anton, Dipl.-Ing., A-4040 Linz (AT); Koller, Werner, Dipl.-Ing., A-4040 Linz (AT); Auer, Kurt, A-4030 Linz (AT)
(74) Vertreter: Hübscher, Helmut, Dipl.-Ing.

(56) Entgegenhaltungen:
- DE-B- 1 213 388
- FR-A- 2 046 769
- US-A- 2 286 078
- US-A- 4 171 965

## Beschreibung

Die Erfindung bezieht sich auf eine Vorrichtung zum Herstellen von Hüttenbims, bestehend aus einem Umlaufförderer mit von einem Boden aufragenden Seitenwänden zur Aufnahme von flüssiger Schlacke und einer im Bereich des Aufgabeendes des Umlaufförderers vorgesehenen, ortsfesten Wasserzuführung.

Zur Herstellung von Hüttenbims wird Wasser in die flüssige Schlacke eingedüst, was zu einem Aufschäumen der Schlacke unter gleichzeitiger Abkühlung führt. Zu diesem Zweck wird die Schlacke üblicherweise in eine entsprechende Aufnahmewanne gegossen, die mit einem Düsenboden versehen ist, so daß das zum Aufschäumen und Kühlen der flüssigen Schlacke erforderliche Druckwasser durch den Wannenboden zugeführt werden kann. Nach dem Erstarren der aufgeschäumten Schlacke wird der so gewonnene Hüttenbims aus der Aufnahmewanne entleert. Nachteilig bei dieser Herstellung von Hüttenbims ist vor allem, daß beim Aufschäumen der Schlacke Schwefeldioxid und Schwefelwasserstoff stoßartig in größeren Mengen anfallen und daher nicht kontrolliert abgeführt werden können. Außerdem ist eine Steuerung des Aufschäumvorganges kaum möglich, weil ein bestimmter Wasserbedarf gedeckt werden muß und nach der Wasserzufuhr der Schäumvorgang selbsttätig abläuft.

Um eine kontinuierliche Verarbeitung der Schlacke sicherzustellen, ist es außerdem bekannt (US-PS 2 286 078), die flüssige Schlacke auf ein Förderband aufzubringen, das einen aus einem Boden und Seitenwänden bestehenden Aufnahmetrog bildet. Vor dem Aufbringen der Schlacke wird dem Förderband Wasser zugeführt, so daß die flüssige Schlacke zum Aufschäumen auf einen Wasserfilm oder in ein Wasserbad gegossen wird. Wegen des dabei unkontrolliert ablaufenden Aufschäumvorganges eignet sich diese bekannte Vorrichtung jedoch vor allem zur Granulatherstellung und weniger für das Erzeugen von Hüttenbims, der im Gegensatz zum Granulat eine möglichst gleichmäßige Porenverteilung auch im Oberflächenbereich aufweisen soll.

Der Erfindung liegt somit die Aufgabe zugrunde, diese Mängel zu vermeiden und eine Vorrichtung zum Herstellen von Hüttenbims der eingangs geschilderten Art zu schaffen, die nicht nur eine kontrollierte Abfuhr von Schwefeldioxid und Schwefelwasserstoff ermöglicht, sondern auch eine Optimierung des Aufschäumvorganges der flüssigen Schlacke erlaubt.

Die Erfindung löst die gestellte Aufgabe dadurch, daß die Wasserzuführung wenigstens ein im Aufgabebereich der Schlacke oberhalb des Bodens zwischen die Seitenwände des Umlaufförderers ragendes, in dessen Förderrichtung verlaufendes Lanzenrohr aufweist, das in die Schlackenschicht auf dem Umlaufförderer ragt und in diesem in die Schlackenschicht reichenden Längsabschnitt mit radialen Wasseraustrittsöffnungen versehen ist.

Da die Wasserzufuhr mit Hilfe wenigstens eines oberhalb des Bodens des Umlaufförderers in die Schlackenschicht ragenden Lanzenrohres erfolgt, kann das für den Schäumvorgang erforderliche Wasser gezielt in die Schlackenschicht eingebracht werden, was eine wesentliche Voraussetzung für ein gleichmäßiges Aufschäumen der auf den Umlaufförderer aufgebrachten Schlackenschicht unabhängig von den beim Aufgießen der Schlacke auf den Umlaufförderer unvermeidbaren Unregelmäßigkeiten ist. Der Aufschäumvorgang, der somit kontinuierlich abläuft und einerseits über die Fördergeschwindigkeit des Umlaufförderers und anderseits über die Wasserzuführung an die jeweils vorteilhaftesten Verhältnisse angepaßt werden kann, ist außerdem mit einem gleichmäßigen, kontinuierlichen Anfall vergleichsweise geringer Mengen an Schwefeldioxid und Schwefelwasserstoff verbunden, so daß diese Schadstoffe einfach im örtlich begrenzten Entstehungsbereich ohne Umweltbelastung abgesaugt werden können.

Da das aus dem Lanzenrohr austretende Wasser um die Wasserlanze einen Dampfmantel erzeugt und das die Lanze durchströmende Wasser das Lanzenrohr kühlt, bleibt die Belastung des Lanzenrohrs durch die flüssige Schlacke in zulässigen Grenzen. Außerdem gleitet die Schlacke entlang des Lanzenrohres, ohne an diesem haften zu bleiben, so daß tatsächlich über solche Lanzenrohre für eine kontinuierliche Wasserzuführung im ortsfesten Bereich der Schlackenaufgabe gesorgt ist. Die Anzahl der Lanzenrohre und deren Verteilung über die Breite des Umlaufförderers hängt naturgemäß von den jeweiligen Verhältnissen ab. Es ist lediglich darauf zu achten, daß der Förderboden nicht in einer die Schlackenmitnahme beeinträchtigenden Weise durch die Lanzenrohre abgedeckt wird.

Um die Wasserzuführung an den örtlichen Wasserbedarf anpassen zu können, der einerseits vom Aufschäumvorgang und anderseits von der gewünschten Kühlung bestimmt wird, können in weiterer Ausbildung der Erfindung mehrere Lanzenrohre mit einer unterschiedlichen Verteilung der Wasseraustrittsöffnungen über den in die Schlackenschicht reichenden Längsabschnitt vorgesehen werden, wodurch eine entsprechende Wasserverteilung nicht nur über den Querschnitt der Schlackenschicht, sondern auch über die Länge zumindest des Aufschäumbereiches sichergestellt wird.

Der Umlaufförderer muß zur Aufnahme und Förderung des Schlackenstromes geeignet sein, was einen trogartigen Querschnitt mit von einem Boden aufragenden Seitenwänden erfordert, unabhängig von der sonstigen Konstruktion des Umlaufförderers, der beispielsweise aus einem Umlaufrad, einem um Umlenkrollen geführten Plattenband, einer endlosen Kette von in einer Umlaufführung geführten Umlaufkörpern od. dgl. aufgebaut sein kann. Steigt der Umlaufförderer im Bereich der Schlackenaufgabe in Förderrichtung an, wie dies bei der geforderten Förderlänge für ein Umlaufrad kaum zu vermeiden ist, so ist die sichere Schlackenmitnahme durch Querwände zu gewährleisten, die für die einzelnen Lanzenrohre mit Durchtrittsschlitzen versehen sein müssen. Diese Querwände beeinträchtigen allerdings das gleichmäßige Aufschäumen des Schlackenstromes, weil sich im Bereich der Querwände eine größere Stauhöhe für die Schlacke ergibt. Außerdem wird durch solche Querwände ein spritzfreies Aufbringen der Schlacke auf den Umlaufförderer erschwert, so daß Umlaufförderer mit einer in Förderrichtung abfallenden Förderstrecke vorzuziehen sind, die ohne Querwände auskommen.

Nach einem entsprechenden Abkühlen der zu Hüttenbims aufgeschäumten Schlacke kann der Hüttenbims am Ablaufende des Umlaufförderers zur Weiterverarbeitung entnommen werden. Die Erstarrung der aufgeschäumten Schlacke hängt dabei von der Kühlung entlang des Förderweges ab. Um den Förderweg beschränken zu können, muß daher für eine zusätzliche Kühlung gesorgt werden. Zu diesem Zweck können neben dem Lanzenrohr bzw. den Lanzenrohren im Bodenbereich ortsfeste Lanzenrohre im Seitenwandbereich des Umlaufförderers vorgesehen sein, die sich vom Aufgabebereich der Schlacke über deren Aufschäumbereich hinaus erstrecken und im Anschluß an den Aufschäumbereich radiale Wasseraustrittslöcher aufweisen. Damit ist es möglich, dem aufgeschäumten Schlackenstrom zur schnelleren Abkühlung und Erstarrung zusätzlich Kühlwasser zuzuführen, was nicht nur eine Verkürzung der sonst erforderlichen Förderstrecke mit sich bringen kann, sondern auch die thermische Belastung der Seitenwände des Umlaufförderers herabsetzt.

Das kontinuierliche Aufschäumen des dem Umlaufförderer aufgegebenen Schlackenstromes eröffnet außerdem eine einfache Möglichkeit zur Herstellung von Bausteinen aus Hüttenbims, wenn im Anschluß an den Aufgabebereich der Schlacke für den zwischen den Seitenwänden des Umlaufförderers gebildeten Aufnahmetrog eine die Aufschäumhöhe der Schlacke begrenzende Abdeckung vorgesehen ist, weil in diesem Fall ein Hüttenbimsstrang entsprechenden Querschnitts am Ablaufende des Umlaufförderers erhalten wird, der zur Erzeugung von Bausteinen der Länge nach zu unterteilen ist. Diese Abdeckung kann ortsfest angeordnet sein oder nach Art eines endlosen Förderbandes umlaufen.

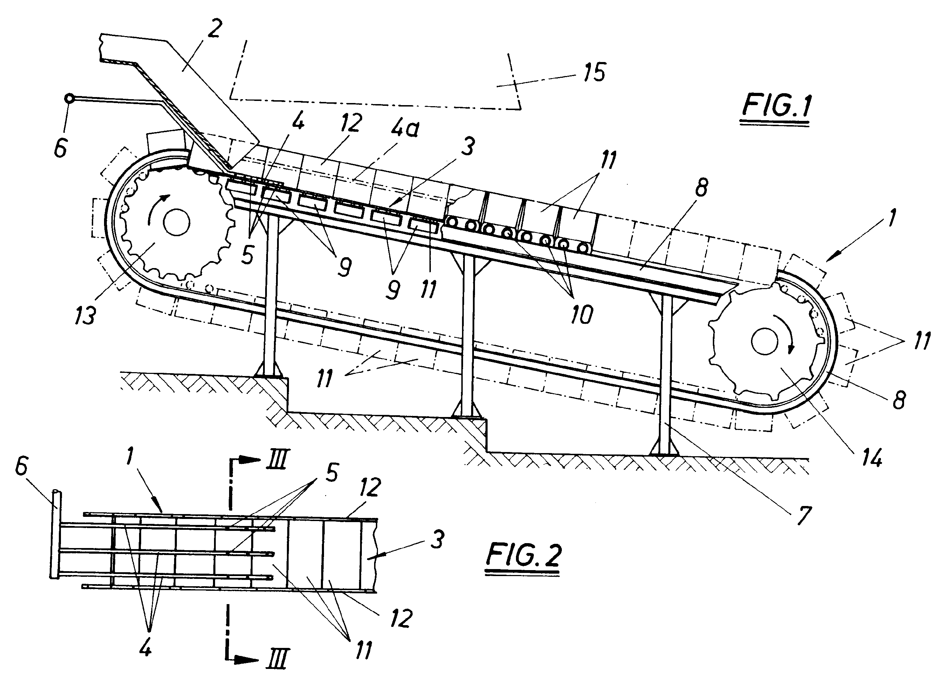

In der Zeichnung ist der Erfindungsgegenstand beispielsweise dargestellt. Es zeigen
Fig. 1 eine erfindungsgemäße Vorrichtung zum Herstellen von Hüttenbims in einer schematischen, zum Teil aufgerissenen Seitenansicht,
Fig. 2 diese Vorrichtung in einer vereinfachten Draufsicht im Bereich der Schlackenaufgabe und

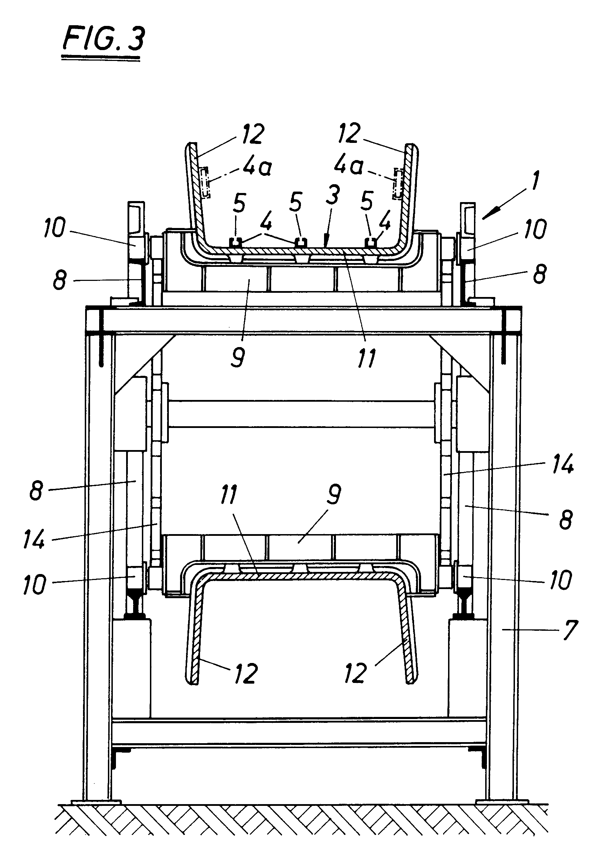

Fig. 3 diese Vorrichtung in einem Querschnitt nach der Linie III-III der Fig. 2.

Die dargestellte Vorrichtung zum Herstellen von Hüttenbims besteht im wesentlichen aus einem die anfallende Schlacke in einem Schlackenstrom kontinuierlich aufnehmenden Umlaufförderer 1, dem im Bereich der Schlackenaufgabe 2 oberhalb des Förderbodens 3 in Förderrichtung verlaufende Lanzenrohre 4 zugeordnet sind, die über einen vorgegebenen Längsabschnitt mit radialen Wasseraustrittsöffnungen 5 versehen und an eine gemeinsame Druckwasserleitung 6 angeschlossen sind.

Der Umlaufförderer 1 selbst weist eine in einem Gestell 7 gehaltene Führung 8 für einzelne Umlaufkörper 9 auf, die mit Hilfe von Laufrollen 10 entlang der Führung 8 verfahren werden können und im Querschnitt U-förmige Förderelemente 11 tragen. Diese Förderelemente 11 bilden mit ihren Schenkeln die Seitenwände 12 und mit ihrem die Schenkel verbindenden Steg den Förderboden 3 des Umlaufförderers 1. Der Antrieb der Umlaufkörper 9 erfolgt über ein aufgabeseitiges Umlenkrad 13, das auf die im Bereich des oberen Trums der Führung 8 befindlichen Umlaufkörper 9 eine Druckkraft ausübt, so daß die einzelnen Förderelemente 11 stirnseitig aneinandergepreßt werden und einen spaltfreien Aufnahmetrog für den Schlackenstrom bilden. Die Umlenkung der Umlaufkörper 9 am ablaufseitigen Ende des Umlaufförderers 1 erfolgt über ein Umlenkrad 14, das mit der Führung 8 zusammenwirkt.

Der über die Aufgabe 2 kontinuierlich zwischen die Seitenwände 12 des Umlaufförderers 1 strömenden, flüssigen Schlacke wird über die Austrittsöffnungen 5 der Lanzenrohre 4 Druckwasser zugeführt, das ein Aufschäumen des Schlackenstromes während seiner Weiterförderung zur Folge hat. Aufgrund der kontinuierlichen Schlackenförderung wird somit ein gleichmäßiger Schäumvorgang sichergestellt, bei dem auch vergleichsweise geringe Mengen an Schwefeldioxid oder Schwefelwasserstoff gleichmäßig anfallen, die mit dem entstehenden Dampf über eine strichpunktiert angedeutete Abzugshaube 15 vollständig abgesaugt werden können, so daß eine Umweltbelastung mit diesen Schadstoffen sicher vermieden wird.

Die aufgeschäumte und während ihrer Förderung ausreichend abgekühlte Schlacke kann dann als Hüttenbims am ablaufseitigen Ende des Umlaufförderers 1 zur weiteren Verarbeitung abgenommen werden. Der Aufschäumvorgang kann dabei in einfacher Weise über die Fördergeschwindigkeit des Umlaufförderers 1 und die Wasserzuführung gesteuert und den jeweiligen Verhältnissen angepaßt werden.

Genügt die Kühlung und damit der Erstarrungsgrad der aufgeschäumten Schlacke am Ende der Förderstrecke des Umlaufförderers 1 nicht den gestellten Anforderungen, so kann für eine zusätzliche Kühlung im Anschluß an den Aufschäumbereich gesorgt werden, indem zusätzlich zu den Lanzenrohren 4 im Bodenbereich des Umlaufförderers 1 Lanzenrohre 4a im Bereich der Seitenwände 12 angeordnet werden, wobei sich diese zusätzlichen Lanzenrohre 4a von der Aufgabe 2 der Schlacke über den Aufschäumbereich hinaus gegebenenfalls bis zum Ablaufende des Umlaufförderers 1 erstrecken können und über ihre Länge entsprechend dem Wasserbedarf verteilte Wasseraustrittslöcher aufweisen. Aufgrund der Kühlung der Lanzenrohre 4 und 4a durch das sie durchströmende Wasser und den sich um diese Rohre bildenden Dampfmantel bleibt die Belastung der Lanzenrohre durch die flüssige Schlacke in zulässigen Grenzen.

## Patentansprüche

1. Vorrichtung zum Herstellen von Hüttenbims, bestehend aus einem Umlaufförderer (1) mit von einem Boden (3) aufragenden Seitenwänden (12) zur Aufnahme von flüssiger Schlacke und einer im Bereich des Aufgabeendes des Umlaufförderers (1) vorgesehenen, ortsfesten Wasserzuführung, dadurch gekennzeichnet, daß die Wasserzuführung wenigstens ein im Aufgabebereich der Schlacke oberhalb des Bodens (3) zwischen die Seitenwände (12) des Umlaufförderers (1) ragendes, in dessen Förderrichtung verlaufendes Lanzenrohr (4) aufweist, das in die Schlackenschicht auf dem Umlaufförderer (1) ragt und in diesem in die Schlackenschicht reichenden Längsabschnitt mit radialen Wasseraustrittsöffnungen (5) versehen ist.

2. Vorrichtung nach Anspruch 1, dadurch gekennzeichnet, daß mehrere Lanzenrohre (4) mit einer unterschiedlichen Verteilung der Wasseraustrittsöffnungen (5) über den in die Schlackenschicht reichenden Längsabschnitt vorgesehen sind.

3. Vorrichtung nach Anspruch 1 oder 2, dadurch gekennzeichnet, daß neben dem im Bodenbereich verlaufenden Lanzenrohr (4) bzw. den Lanzenrohren (4) ortsfeste Lanzenrohre (4a) im Seitenwandbereich des Umlaufförderers (1) vorgesehen sind, die sich vom Aufgabebereich der Schlacke über deren Aufschäumbereich hinaus erstrecken und im Anschluß an den Aufschäumbereich radiale Wasseraustrittslöcher aufweisen.

4. Vorrichtung nach einem der Ansprüche 1 bis 3, dadurch gekennzeichnet, daß im Anschluß an den Aufgabebereich der Schlacke für den zwischen den Seitenwänden (12) des Umlaufförderers (1) gebildeten Aufnahmetrog eine die Aufschäumhöhe der Schlacke begrenzende Abdeckung vorgesehen ist.

## Claims

1. A device for producing blast furnace slag, comprising a fixed-tray conveyor (1) with side walls (12) extending from a base (3) for holding liquid slag and a stationary water supply means near the delivery end of the conveyor (1), characterised in that the supply means comprises at least one lance tube (4) extending in the conveying direction an projecting between the side walls (12) of the conveyor (1)above the base (3) in the slag delivery region and extending into the layer of slag on the conveyor (1), the longitudinal portion of the tube which extends into the slag layer being formed with radial water outlet openings (5).

2. A device according to claim 1, characterised in that a number of lance tubes (4) having variously distributed water outlet openings (5) are provided along the longitudinal portion which extends into the slag layer.

3. A device according to claim 1 or 2, characterised in that in addition to the lance tube (4) or lance tubes (4) extending in the base region, stationary lance tubes (4a) are provided in the side wall region of the conveyor (1) and extend from the slag delivery region and over the slag foaming region, adjacent which they have radial water outlet holes.

4. A device according to any of claims 1 to 3, characterised in that adjacent the slag delivery region a cover limiting the foaming height of the slag is provided for the trough formed between the side walls (12) of the conveyor (1).

## Revendications

1. Dispositif pour la production de laitier de hauts fourneaux, constitué par un transporteur (1) à plaques, comprenant des parois latérales (12) qui s'élèvent sur un fond (3) et destiné à recevoir le laitier liquide, et une amenée d'eau fixe en position, prévue dans la région de chargement du transporteur à plaques (1),
caractérisé en ce que l'amenée d'eau comprend au moins un tube de lance (4) qui s'étend dans la région de chargement du laitier, au-dessus du fond (3), entre les parois latérales (12) du transporteur à plaques (1), et dans la direction de transport de ce transporteur, ce tube plongeant dans la couche de laitier formée sur le transporteur à plaques (1), et étant muni d'orifices de sortie d'eau radiaux (5) dans le segment de sa longueur qui est plongé dans la couche de laitier.

2. Dispositif selon la revendication 1,
caractérisé en ce que plusieurs tubes de lances (4) présentant différentes répartitions des orifices de sortie d'eau (5) sont prévus sur le segment de la longueur qui est plongée dans la couche de laitier.

3. Dispositif selon la revendication 1 ou 2,
caractérisé en ce qu'en supplément du tube de lance (4) ou des tubes de lance (4) qui s'étendent dans la région du fond, sont prévus des tubes de lances fixes (4a) placés dans la région des parois latérales du transporteur à plaques (1), qui se prolongent, en partant de la région de chargement du laitier, sur la région de gonflement de ce laitier en mousse, et présentent des trous de sortie d'eau radiaux à la suite de la région de gonflement en mousse.

4. Dispositif selon une des revendications 1 à 3,
caractérisé en ce qu'il est prévu, à la suite de la région de chargement du laitier pour l'auge de réception formée entre les parois latérales (12) du transporteur à plaques, un recouvrement qui limite la hauteur de gonflement du laitier en mousse.
